(19) Europäisches Patentamt
European Patent Office
Office européen des brevets

(11) EP 4 086 299 B1

# (12) EUROPEAN PATENT SPECIFICATION

(45) Date of publication and mention of the grant of the patent:
**03.07.2024 Bulletin 2024/27**

(21) Application number: **21171757.4**

(22) Date of filing: **03.05.2021**

(51) International Patent Classification (IPC):
***C08J 5/18*** *(2006.01)* ***B29C 55/12*** *(2006.01)*
***C08L 23/12*** *(2006.01)* ***C08L 23/08*** *(2006.01)*
***H01B 3/44*** *(2006.01)*

(52) Cooperative Patent Classification (CPC):
(C-Sets available)
**C08J 5/18; B29C 55/12; C08L 23/0815; C08L 23/12; H01B 3/441;** C08J 2323/12; C08L 2207/20 (Cont.)

## (54) THERMALLY TREATED BIAXIALLY ORIENTED POLYPROPYLENE FILM

THERMISCH BEHANDELTE BIAXIAL ORIENTIERTE POLYPROPYLENFOLIE

FILM DE POLYPROPYLÈNE ORIENTÉ BIAXIALEMENT TRAITÉ THERMIQUEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.11.2022 Bulletin 2022/45**

(73) Proprietor: **Borealis AG**
**1020 Vienna (AT)**

(72) Inventors:
- **POLITIDIS, Christos**
  **11633 Athens (GR)**
- **FLOUDAS, Georgios**
  **45221 Ioannina (GR)**
- **GITSAS, Antonios**
  **4021 Linz (AT)**

(74) Representative: **Kador & Partner Part mbB**
**Corneliusstraße 15**
**80469 München (DE)**

(56) References cited:
**EP-A1- 2 995 641**
**WO-A1-2014/205624**
**WO-A1-2017/064224**
**WO-A1-2020/127861**
**WO-A1-2020/127862**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 67/02, C08K 2003/265;**
**C08L 23/12, C08L 23/10, C08K 5/3437,**
**C08K 5/098, C08K 5/13, C08K 5/1345**

## Description

The present invention is directed to a process for producing a thermally treated biaxially oriented polypropylene film and to a thermally treated biaxially oriented polypropylene film obtained by this process. The present invention further relates to a capacitor comprising an insulation film comprising a layer of the thermally treated biaxially oriented polypropylene film of the present invention. The present invention is further directed to the use of the thermally treated biaxially oriented polypropylene film of the present invention.

Polypropylene is used in many applications and is for instance the material of choice in the field of film capacitors as its chain lacks any kind of polar groups which orient under electrical field stress. Various types of electric equipment contain inverters and accordingly demands have been growing for capacitors smaller in size and enhanced in capacitance. Because of these demands from the market, biaxially oriented polypropylene films which are thinner and improved in both mechanical properties and electrical properties are preferably used in the field of capacitor applications.

Capacitor films must withstand extreme conditions like high temperatures and must have high dielectrical breakdown field strength. Additionally it is appreciated that capacitor films possess good mechanical properties like a high stiffness and also high operating temperatures. Many capacitor film grades, namely for power applications such as welding, e-vehicles, trains, ovens, wind mills, solar panels etc, are using high isotactic polypropylene resins. Apart from balanced shrinkage and optimised surface roughness, the main advantage associated with the high isotacticity is the high heat resistance of the final film, relating to the high crystallinity, the high onset temperature of the melting and the high peak melting temperature. There are also capacitor film grades based on high isotactic polypropylene resins wherein the underlying polyolefin composition contains in addition long-chain branched polypropylene.

Dielectric breakdown occurs when the electrical field applied to an insulator exceeds the dielectric breakdown field strength of the insulator, and when a current spark breaks through the material, causing a short circuit. In general, the phenomenon of dielectric breakdown as a physical process is not entirely understood, and correlations between structure of the insulator (morphology) and dielectric strength are not well established. The primary reason seems to be related to the fact that the breakdown event is the final result of several degradative processes on nano and microscopic scale, and this results in stochastic behaviour. Numerous factors influence final breakdown strength such as temperature, humidity, electrode metal, electrode geometry (shape, area), voltage raise rate, DC or AC voltage, surface roughness and thickness of the specimen. In particular high operating temperatures lead to dielectric breakdowns and capacitor failures.

WO 2020/127862 A1 discloses a biaxially oriented polypropylene (BOPP) film with improved surface properties and to a capacitor comprising an insulation film comprising a layer of the biaxially oriented polypropylene film. WO 2020/127862 A1 is silent on a thermal treatment of the obtained BOPP film.

It is therefore an object of the present invention to provide biaxially oriented polypropylene films having improved permittivity and/or improved dielectrical breakdown field strength, in particular for use as insulation layer in capacitors at higher operating temperatures.

It is a further object to provide a process for obtaining such biaxially oriented polypropylene films having improved permittivity and/or improved dielectrical breakdown field strength, in particular for use as insulation layer in capacitors at higher operating temperatures.

The present invention is based on the finding that the above objects can be solved by thermally treating a biaxially oriented polypropylene film according to the present invention.

The present invention therefore provides a process for producing a thermally treated biaxially oriented polypropylene film, the process comprising the steps of:

(A) providing a polypropylene composition comprising, preferably consisting of,

(A1) from 90 to 99.99 wt.%, based on the total weight of the polypropylene composition, of a homopolymer of propylene having a content of isotactic pentad fraction of from 93 to 98 % and a melt flow rate MFR2 of from 0.4 to 10 g/10 min, and

(A2) from 0.0000001 to 1 wt.% of a polymeric $\alpha$-nucleating agent based on the total weight of the polypropylene composition,
and/or

(A3) from 0.0000001 to 0.0002 wt.% of a $\beta$-nucleating agent based on the total weight of the polypropylene composition,

(B) extruding the polypropylene composition to a film,

(C) orienting the film simultaneously or sequentially to obtain a biaxially oriented polypropylene film,
(C1) optionally metallizing the biaxially oriented polypropylene film to obtain a metallized biaxially oriented polypropylene film,

(D) thermally treating the biaxially oriented polypropylene film metallized or non-metallized by

(D1) heating the biaxially oriented polypropylene film to a first annealing temperature T1, wherein T1 is between 80 and 150 °C,

(D2) annealing the biaxially oriented polypropylene film at the first annealing temperature T1 for a first annealing time t1 to obtain the thermally treated biaxially oriented polypropylene film, wherein t1 is between 10 and 120 min,

(D3) cooling the thermally treated biaxially oriented polypropylene film, preferably cooling to room temperature,

(E) recovering the thermally treated biaxially oriented polypropylene film.

The present invention has a number of advantages. The thermal treatment of biaxially oriented polypropylene films leads to an improved dielectric permittivity of the film, in particular at operating temperatures of above 100 °C.

This can be associated to permanent structural changes occurring during the treatment, as discussed below. An improved dielectric permittivity leads, in turn, to higher capacitance of a capacitor comprising the thermally treated biaxially oriented polypropylene film as insulation film.

A further advantage of the invention is that changes in the structure of the thermally treated biaxially oriented polypropylene film according to the invention structural occur only at higher temperatures, such as around 130 °C, compared to state of the art biaxially oriented polypropylene films having operational temperatures around 115 °C. The thermally treated biaxially oriented polypropylene film according to the invention can thus advantageously operate at higher temperatures, such as around 130 °C, without causing dielectric breakdowns or other capacitor failures.

The thermally treated biaxially oriented polypropylene films according to the invention can thus be used for improving the dielectric permittivity and/or for improving the dielectrical breakdown field strength of a capacitor, in particular of an insulation film of a capacitor. In particular, they can be used for capacitors operating at high temperatures above 100 °C, preferably above 115 °C.

The expression homopolymer of propylene as used herein relates to a polypropylene that consists substantially, i.e. of at least 99.5 wt.%, more preferably of at least 99.8 wt.%, of propylene units. In a preferred embodiment only propylene units are detectable in the homopolymer of propylene. The comonomer content can be determined with $^{13}C$ NMR spectroscopy, as described below. Further, it is appreciated that the homopolymer of propylene is a linear polypropylene.

In step (A) of the process according to the invention a polypropylene composition is provided.

The polypropylene composition preferably has a melt flow rate MFR2 of from 0.5 to 10 g/10 min, more preferably from 1 to 7 g/10 min.

The polypropylene composition comprises a high isotactic homopolymer of propylene (A1), a polymeric $\alpha$-nucleating agent (A2) and/or a $\beta$-nucleating agent (A3). In the following, the homopolymer of propylene (A1) will be shortly referred to also as high isotactic homopolymer of propylene (A1).

The high isotactic homopolymer of propylene (A1) is the main constituent of the polypropylene composition. The polypropylene composition comprises from 90 to 99.9 wt.%, preferably from 95 to 99.9 wt.%, more preferably from 98 to 99.9 wt.% and in particular from 99 to 99.9 wt.% of the high isotactic homopolymer of propylene (A1).

The high isotactic homopolymer of propylene (A1) has a melt flow rate MFR2 of from 0.4 to 10 g/10 min, preferably from 1 to 7 g/10 min, more preferably from 2 to 6 g/10min. A too low MFR has the consequence of poor processability. On the other hand, a too high MFR has the consequence of sagging at the elevated temperatures used in the process of producing a biaxially oriented polypropylene film.

The high isotactic homopolymer of propylene (A1) has a content of isotactic pentad fraction (mmmm-fraction) of from 93 to 98 %, preferably from 94 to 98 %, such as from 95 to 98 %. The content of the isotactic pentad fraction is calculated as the percentage of the mmmm-pentads from all the pentads. A too low content of isotactic pentad fraction has a consequence that the final crystallinity of the film becomes rather low and the tensile properties and moduli of the film decrease. On the other hand, a too high content of isotactic pentad fraction has the consequence that there may be frequent film breaks during film orientation in machine direction and/or transverse direction.

The high isotactic homopolymer of propylene (A1) preferably has an ash content of not more than 30 ppm, more preferably not more than 20 ppm and in particular not more than 15 ppm, such as not more than 10 ppm. Too high ash content could be detrimental for the dielectric properties of the film, especially if the ash contains metal residues. Such films cannot be used for making capacitors. The ash content of the high isotactic homopolymer of propylene (A1)

will be usually at least 1 ppm.

A process which is particularly effective in producing propylene homopolymers which are suitable for making the films of the present invention, e.g. the high isotactic homopolymer of propylene (A1), is disclosed in EP-A-2543684, where a catalyst based on a solid component comprising titanium trichloride is used in combination with an aluminium alkyl, organic ether and an alkyl methacrylate.

The polymerisation is conveniently conducted in slurry. In such a process the catalyst, hydrogen and propylene monomer are contacted in a diluent comprising essentially one or more alkanes having from 4 to 15 carbon atoms, preferably from 10 to 14 carbon atoms.

By "comprising essentially" is hereby meant that the diluent comprises at least 90 wt.%, preferably at least 95 wt.% and more preferably at least 99 wt.% of one or more of such alkanes.

The polymerisation is typically conducted at a temperature of from 50 to 100 °C, preferably at 60 to 80 °C, and a pressure of from 1 to 50 bar, preferably from 3 to 15 bar.

Preferably, the process comprises one or more washing steps. Washing is typically conducted by contacting polymer slurry with a hydrocarbon diluent in one or more steps. After the contacting step the excess diluent is typically removed, for instance by centrifuging. Preferably the polymer slurry is contacted with the hydrocarbon diluent in at least two steps. When the washing includes multiple steps, it is preferred that in at least one step an alcohol or an ether is present in addition to the hydrocarbon diluent. This facilitates the removal of the catalyst components from the polymer and thereby a polymer with very low ash content can be obtained.

The polypropylene composition provided in step (A) according to the invention further comprises a polymeric $\alpha$-nucleating agent (A2) and/or a $\beta$-nucleating agent (A3).

The polypropylene composition comprises - in one alternative - a polymeric $\alpha$-nucleating agent (A2). The polymeric $\alpha$-nucleating agent (A2) is preferably a polymer of a vinyl compound of the formula $CH_2$=CH-$CHR_1R_2$, wherein $R_1$ and $R_2$ together form a 5- or 6-membered saturated, unsaturated, or aromatic ring, or independently represent an alkyl group comprising 1 to 4 carbon atoms. Preferably, the polymeric $\alpha$-nucleating agent (A2) is a homopolymer of the vinyl compound of the formula $CH_2$=CH-$CHR_1R_2$. The polypropylene composition comprises from 0.0000001 to 1 wt.% of the polymeric $\alpha$-nucleating agent (or, from 0.001 ppm to 10,000 ppm), preferably from 0.000001 to 0.01 wt.% (or, from 0.01 ppm to 100 ppm), and especially preferably from 0.000001 to 0.005 wt.% (or, from 0.01 ppm to 50 ppm) of the polymeric $\alpha$-nucleating agent (A2). Preferably, the polypropylene composition comprises from 0.000001 to 0.001 wt.% (or, from 0.01 ppm to 10 ppm), and even more preferably from 0.000001 to 0.0005 wt.% (or, from 0.01 ppm to 5 ppm) of the polymeric $\alpha$-nucleating agent (A2), based on the total weight of the polypropylene composition.

One method for incorporating the polymeric $\alpha$-nucleating agent (A2) into the polypropylene composition includes prepolymerising the polymerisation catalyst by contacting the catalyst with the vinyl compound of the formula $CH_2$=CH-$CHR_1R_2$, wherein $R_1$ and $R_2$ together form a 5- or 6-membered saturated, unsaturated, preferably non-aromatic unsaturated, or aromatic ring, or independently represent an alkyl group comprising 1 to 4 carbon atoms. Propylene is then polymerised in the presence of such prepolymerised catalyst.

In the prepolymerisation the catalyst is prepolymerised so that it contains up to 5 grams of prepolymer per gram of solid catalyst component, preferably from 0.1 to 4 grams of prepolymer per gram of the solid catalyst component. Then, the catalyst is contacted at polymerisation conditions with the vinyl compound of the formula $CH_2$=CH-$CHR_1R_2$, wherein $R_1$ and $R_2$ are as defined above.

Especially preferably $R_1$ and $R_2$ are both methyl groups and the vinyl compound is accordingly 3-methyl-1-butene. Especially preferably $R_1$ and $R_2$ form a saturated 5- or 6-membered ring. Especially preferably the vinyl compound is vinylcyclohexane.

Preferably, the polymeric $\alpha$-nucleating agent (A2) is selected from the group consisting of polyvinylcyclohexane, poly(3-methyl-1-butene) and mixtures thereof.

Especially preferably the catalyst contains from 0.5 to 2 grams of the polymerised vinyl compound, such as poly(vinylcyclohexane), per gram of solid catalyst component. Especially preferably the polymeric $\alpha$-nucleating agent is selected from the group consisting of polyvinylcyclohexane, poly(3-methyl-1-butene) and mixtures thereof.

This approach allows the preparation of nucleated polypropylene as disclosed in EP-A-607703, EP-A-1028984, EP-A-1028985 and EP-A-1030878.

The polymeric $\alpha$-nucleating agent according to the present invention is not a polymer of propylene.

Preferably, the prepolymerisation is conducted in slurry in an inert diluent at a temperature within the range of from 20 to 80 °C, preferably from 35 to 65 °C. The pressure is not critical and can be selected from an atmospheric pressure to 50 bar. The reaction time is selected so that the amount of unreacted vinyl compound is less than a predetermined limit, such as less than 2000 ppm of the reaction mixture, or less than 1000 ppm.

As described above, after prepolymerising the polymerisation catalyst, propylene is polymerised in the presence of such prepolymerised catalyst which approach allows the preparation of nucleated polypropylene.

Hence, according to one possible method the polypropylene composition is produced by homopolymerising propylene in the presence of such prepolymerised catalyst. The propylene homopolymer is thereby nucleated by the

polymeric $\alpha$ -nucleating agent (A2). The polypropylene composition then preferably comprises from 0.1 to 200 ppm of the polymeric $\alpha$-nucleating agent (A2), preferably poly(vinylcyclohexane), based on the total weight of the polypropylene composition. The polymerisation process and the catalyst are then suitably as described above. Thereby the high isotactic homopolymer of propylene (A1) is formed on the catalyst containing the polymeric $\alpha$-nucleating agent (A2).

Alternatively, and more preferably, the polypropylene composition is produced by homopolymerising propylene in the presence of a polymerisation catalyst which has not been prepolymerised with the vinyl compound as disclosed above, thereby producing the high isotactic homopolymer of propylene (A1). In such a case the high isotactic homopolymer of propylene (A1) is combined before or at the extrusion step with a further polymer, namely a propylene homo- or copolymer (A3) which has been produced by homopolymerising propylene, or copolymerising propylene and a comonomer, in the presence of a catalyst which has been prepolymerised with the vinyl compound as referred to above.

The polypropylene composition comprises - in one alternative - in addition to the homopolymer of propylene (A1) up to 0.0002 wt.%, based on the total weight of the polypropylene composition of a $\beta$-nucleating agent (A3). The amount of the $\beta$-nucleating agent (A3) will be usually at least 0.0000001 wt.%, based on the total weight of the polypropylene composition. Preferably, the amount of the $\beta$-nucleating agent (A3) is 0.0000001 wt.% to 0.00015 wt.%, more preferably 0.0000001 wt.% to 0.000125 wt.%, based on the total weight of the polypropylene composition.

The term "$\beta$-nucleating agent" refers to any nucleating agent which is suitable for inducing crystallisation of propylene polymers in the hexagonal or pseudohexagonal modification. Mixtures of such nucleating agents may also be employed.

Suitable types of $\beta$-nucleating agents are

dicarboxylic acid derivative type diamide compounds from $C_5$-$C_8$-cycloalkyl monoamines or $C_6$-$C_{12}$-aromatic monoamines and $C_5$-$C_8$-aliphatic, $C_5$-$C_8$-cycloaliphatic or $C_6$-$C_{12}$-aromatic dicarboxylic acids, e.g. N,N'-di-$C_5$-$C_8$-cycloalkyl-2,6-naphthalene dicarboxamide compounds such as N,N'-dicyclohexyl-2,6-naphthalene dicarboxamide and N,N'-dicyclooctyl-2,6-naphthalene dicarboxamide, N,N'-di-$C_5$-$C_8$-cycloalkyl-4,4-biphenyldicarboxamide compounds such as N,N'-dicyclohexyl-4,4-biphenyldicarboxamide and N,N'-dicyclopentyl-4,4-biphenyldicarboxamide, N,N'-di-$C_5$-$C_8$-cycloalkyl-terephthalamide compounds such as N,N'-dicyclohexylterephthalamide and N,N'-dicyclopentylterephthalamide, N,N'-di-$C_5$-$C_8$-cycloalkyl-1,4-cyclohexanedicarboxamide compounds such as N,N'-dicyclo-hexyl-1,4-cyclohexanedicarboxamide and N,N'-dicyclohexyl-1,4-cyclopentanedicarboxamide,

diamine derivative type diamide compounds from $C_5$-$C_8$-cycloalkyl monocarboxylic acids or $C_6$-$C_{12}$-aromatic monocarboxylic acids and $C_5$-$C_8$-cycloaliphatic or $C_6$-$C_{12}$-aromatic diamines, e.g. N,N'-$C_6$-$C_{12}$-arylene-bis-benzamide compounds such as N,N'-p-phenylene-bis-benzamide and N,N'- 1,5-naphthalene-bis-benzamide, N,N'-$C_5$-$C_8$-cycloalkyl-bis-benzamide compounds such as N,N'-1,4-cyclopentane-bis-benzamide and N,N'-1,4-cyclohexane-bis-benzamide, N,N'-p-$C_6$-$C_{12}$-arylene-bis-C5-C8-cycloalkyl carboxamide compounds such as N,N'-1,5-naphthalene-bis-cyclohexanecarboxamide and N,N'-1,4-phenylene-bis-cyclohexanecarboxamide, and N,N'-$C_5$-$C_8$-cycloalkyl-bis-cyclohexanecarboxamide compounds such as N,N'-1,4-cyclopentane-bis-cyclohexanecarboxamide and N,N'-1,4-cyclohexane-bis-cyclohexanecarboxamide,

amino acid derivative type diamide compounds from amidation reaction of $C_5$-Cs-alkyl, $C_5$-$C_8$-cycloalkyl- or $C_6$-$C_{12}$-arylamino acids, $C_5$-$C_8$-alkyl-, $C_5$-$C_8$-cycloalkyl- or $C_6$-$C_{12}$-aromatic monocarboxylic acid chlorides and $C_5$-$C_8$-alkyl-, $C_5$-$C_8$-cycloalkyl- or $C_6$-$C_{12}$- aromatic mono-amines, e.g. N-phenyl-5-(N-benzoylamino)pentane amide and N-cyclohexyl-4-(N-cyclohexyl-carbonylamino)benzamide.

Further suitable $\beta$-nucleating agents are quinacridone type compounds, e.g. 5,12-dihydro-quino[2,3-b]acridine-7,14-dione (i.e. quinacridone), dimethylquinacridone and dimethoxyquinacridone, quinacridonequinone type compounds, e.g. quino[2,3-b]acridine-6,7,13,14(5H,12H)-tetrone (i.e. quinacridonequinone), and dimethoxyquinacridonequinone and dihydroquinacridone type compounds, e.g. 5,6,12,13- tetrahydroquino[2,3-b]acridine-7, 14-dione (i.e. a dihydroquinacridone), dimethoxy dihydroquinacridone and dibenzodihydroquinacridone.

Still further suitable $\beta$-nucleating agents are dicarboxylic acid salts of metals from group 11a of periodic table, e.g. pimelic acid calcium salt and suberic acid calcium salt; and mixtures of dicarboxylic acids and salts of metals from group 11a of the periodic table.

Still further suitable $\beta$-nucleating agents are salts of metals from group 11a of periodic system and imido acids of the formula

$$HOOC-\left[CH_2\right]_x-\underset{\displaystyle R}{\underset{|}{C}H}-N\begin{matrix} \diagup CO \diagdown \\ \diagdown CO \diagup \end{matrix}Y$$

wherein x = 0 to 4; R = H, -COOH, $C_1$-$C_{12}$-alkyl, $C_5$-$C_8$-cycloalkyl or $C_6$-$C_{12}$-aryl, and Y = $C_1$-$C_{12}$-alkyl, $C_5$-$C_8$-cycloalkyl or $C_6$-$C_{12}$-aryl - substituted bivalent $C_6$-$C_{12}$-aromatic residues, e.g. calcium salts of phthaloylglycine, hexahydrophthaloylglycine, N-phthaloylalanine, phthalimidoacetate and/or N-4-methylphthaloylglycine.

Preferred β-nucleating agents are any one or mixtures of N,N'-dicyclohexyl-2,6-naphtalene dicarboxamide, the β-nucleating agents of EP 177961 and those of EP 682066.

Particularly preferred β-nucleating agents are any one or mixtures of 5,12-dihydro-quino[2,3-b]acridine-7,14-dione (CAS 1047-16-1) (i.e. quinacridone), quino[2,3-b]acridine-6,7,13,14(5H,12H)-tetrone (CAS 1503-48-6) (i.e. quinacridonequinone), 5,6,12,13-tetrahydroquino[2,3-b]acridine-7,14-dione (CAS 5862- 38-4) (i.e. a dihydroquinacridone), N,N-dicyclohexyl-2,6-naphtalene dicarboxamide (CAS 153250-52-3) and salts of dicarboxylic acids with at least 7 carbon atoms with metals of group 11a of the periodic table, preferably calcium pimelate (CAS 19455-79-9).

Preferably, the β-nucleating agent is selected from the group consisting of 5,12- dihydro-quino[2,3-b]acridine-7,14-dione, quino[2,3-b] acridine-6,7, 13, 14(5H, 12H)- tetrone, 5,6,12,13-tetrahydroquino[2,3-b]acridine-7,14-dione, and mixtures thereof.

A still more preferred β-nucleating agent is a mixture of 5,12-dihydro-quino[2,3-b]acridine-7,14-dione (CAS 1047-16-1), quino[2,3-b]acridine-6,7,13,14(5H, 12H)-tetrone (CAS 1503-48-6) and 5,6,12,13-tetrahydroquino[2,3-b]acridine-7, 14-dione (CAS 5862-38- 4), which is commercially available as Cinquasia Gold YT-923-D from BASF.

This β-nucleating agent is characterised by very high activity. Cinquasia Gold YT-923-D is preferred as β-nucleating agent because it has a very high activity and is very inexpensive.

In step (B) according to the process of the invention, the polypropylene composition provided in step (A) is extruded to a film, preferably a flat film. In principle, any extruder suitable for extruding a film can be used for step (B). Preferably, the die of the extruder is a slot die or flat die for extruding a film.

In step (C) according to the process of the invention, the film extruded in step (B) is simultaneously or sequentially orientated, preferably in a continuous process, to obtain a biaxially oriented polypropylene film. Orientation is done by drawing or stretching the film.

Preferably, in step (C) the film is sequentially orientated, and sequential orientation is performed either first in machine direction (MD) and subsequently in transverse direction (TD) or first in traverse direction (TD) and subsequently in machine direction (MD), more preferably first in machine direction (MD) and subsequently in transverse direction (TD).

Preferably, a draw ratio in machine direction (MD) is at least 8.0 to 20.0, more preferably 9.0 to 15.0 and/or wherein a draw ratio in transverse direction (TD) is at least 8.0 to 20.0, more preferably 9.0 to 15.0.

Preferably, the film obtained in step (C) has a thickness between 0.5 to 10 μm, preferably 1 to 6 μm, and most preferably 2 and 5 μm.

Preferably, orienting in step (C) is conducted in a continuous process, preferably with a throughput of 20 kg/h to 900 kg/h, further preferred >25 kg/h to 500 kg/h. A continuous process may be any process that produces product without interruption when running properly and/or does not produce products in batches.

Preferably, steps (B) and (C) are carried out as a tenter process. An exemplary tenter process is as follows. The film is obtained by extrusion of the polypropylene composition through a flat die and the extrudate is collected and cooled with a rotating chill roll so that the film solidifies. The chill roll continuously transports the non-oriented film into a tenter frame installed in an oven. The tenter frame is realized by two rails on which clips move in machine direction, driven by a linear motor system. The two rails from entrance to exit of the oven have parallel, diverging and slightly converging mutual arrangement to form a pre-heat, draw and relaxation zone. The biaxial drawing of the non-oriented cast film is accomplished by feeding the non-oriented cast film into the pre-heat zone of the tenter where, at the entrance, the clamps grab the non-oriented cast film on both sides. The movement direction of the clamps is in extrusion direction, i.e. machine direction (MD), and the clip-to-clip distance in MD is constant in the pre-heat zone. For biaxial drawing or stretching the film, the rail-to-rail distance in the draw zone increases relative to the pre-heat zone to accomplish the transverse direction (TD) drawing film whereas the clip-to-clip distance increases in MD to accomplish the MD drawing. The drawing can be either simultaneously or sequentially as described above.

For instance, the molten polypropylene composition is first extruded through the die to a chill roll. The chill roll surface temperature is held between 10 to 100 °C, preferably from 20 to 98 °C. The thickness of the film is from 50 to 1000 μm, preferably from 100 to 500 μm. The film is then passed to the tenter frame and drawn as described above. The tenter oven temperature is set to a temperature between 160 and 175 °C. The biaxially oriented film is collected on a mandrel before which it is trimmed at both sides to remove the non-oriented edges where the clips held the film.

Preferably, the biaxially oriented polypropylene film comprises at least one layer comprising the polypropylene composition as described in all embodiments above. Preferably the layer comprising the polypropylene composition contains from 90 to 100 wt.% of the polypropylene composition, based on the total weight of the film layer. More preferably, the layer contains from 95 to 100 wt.% of the polypropylene composition and even more preferably from 98 to 100 wt.%, such as 99 to 100 wt.%. Especially preferably, the layer consists of the polypropylene composition.

Preferably, the biaxially oriented polypropylene film may include additional layers, such as a polymer layer. Eventual additional polymer layers may be produced by any means known in the art. Thus, they may be, and they

preferably are, coextruded with the film layer according to the present invention. Alternatively, they may be laminated to form the film structure.

Optionally, the process according to the invention further comprises step (C1) of metallizing the biaxially oriented polypropylene film to obtain a biaxially oriented polypropylene film further comprising a metal layer. Metal layers are present especially if the biaxially oriented polypropylene film is used for making capacitors.

Metallizing, i.e. depositing a metal layer on the biaxially oriented polypropylene film, can be done in any manner known in the art, such as by electric smelting vacuum deposition, by ion beam vacuum deposition, by sputtering or by ion plating. The thickness of such metal layer is typically from 100 Å (0.01 pm) to 5000 Å (0.5 pm).

Step (C1) is preferably performed subsequent to step (C).

In case optional step (C1) is not performed, the biaxially oriented polypropylene film obtained in step (C) is not metallized and can thus also be referred to as non-metallized biaxially oriented polypropylene film.

The process according to the invention further comprises step (D) of thermally treating the biaxially oriented polypropylene film by

(D1) heating the biaxially oriented polypropylene film to an annealing temperature $T_{ann}$, wherein $T_{ann}$ is between 80 and 150 °C,

(D2) annealing the biaxially oriented polypropylene film at the annealing temperature $T_{ann}$ for a annealing time $t_{ann}$ to obtain the thermally treated biaxially oriented polypropylene film, wherein $t_{ann}$ is between 10 and 140 min,

(D3) cooling the thermally treated biaxially oriented polypropylene film, preferably cooling to room temperature,

Preferably, the annealing temperature $T_{ann}$ is between 90 and 140 °C, more preferably between 100 and 120 °C.

Preferably, $t_{ann}$ is between 30 and 130 min, more preferably between 50 and 120 min.

Preferably, the heating to the annealing temperature $T_{ann}$ in step (D1) is done at a heating rate of from 1 °C/min to 10 °C/min, more preferably 3 °C/min to 7 °C/min, and most preferably at 5 °C/min. Usually, the heating of the biaxially oriented polypropylene film in step (D1) is done starting from room temperature to the annealing temperature $T_{ann}$.

Preferably, the cooling in step (D3) is done at a cooling rate of from 1 °C/min to 10 °C/min, more preferably 3 °C/min to 7 °C/min, and most preferably at 5 °C/min.

Preferably, heating step (D) is performed in an inert atmosphere, such as an $N_2$ atmosphere.

The heating step (D) can be performed in any apparatus suitable for heating, annealing and cooling the biaxially oriented polypropylene film, preferably in an inert atmosphere, as described herein, such as an oven.

In step (E) of the process according to the invention, the thermally treated biaxially oriented polypropylene film is recovered.

Preferably, the thermally treated biaxially oriented polypropylene film or the biaxially oriented polypropylene film further comprises a metal layer.

In case the biaxially oriented polypropylene film further comprises the metal layer, the metal layer is preferably formed by optional metallization step (C1) as described herein.

In case the thermally treated biaxially oriented polypropylene film further comprises the metal layer, the metal layer is preferably formed by metallizing the thermally treated biaxially oriented polypropylene film. Metallizing is preferably done as described for step (C1) herein.

Preferably, the polypropylene composition further comprises up to 9.99 wt.%, based on the total weight of the polypropylene composition, of a propylene homo- or copolymer (A4) other than the homopolymer of propylene (A1), i.e. other than the high isotactic homopolymer of propylene (A1).

The amount of the propylene homo- or copolymer (A4) will be usually at least 0.01 wt.%, based on the total weight of the polypropylene composition.

The propylene homo- or copolymer (A4) is typically present as a carrier polymer for the polymeric $\alpha$-nucleating agent (A2). The propylene homo- or copolymer (A4) preferably comprises from 0.5 to 200 ppm, preferably from 0.5 to 100 ppm, more preferably from 1 to 200 ppm, such as 1 to 100 ppm, of the polymeric $\alpha$-nucleating agent (A2), preferably of poly(vinylcyclohexane), based on the weight of the propylene homo- or copolymer (A4).

The amount of the homo- or copolymer of propylene (A4) is preferably from 0.1 to 9.99 wt.%, based on the polypropylene composition, preferably from 0.1 to 5 wt.%, more preferably from 0.2 to 4.99 wt.%, even more preferably from 0.2 to 1.99 wt.%, and in particular from 0.2 to 0.99 wt.%, based on the polypropylene composition.

The propylene homo- or copolymer (A4) may be any homo- or copolymer of propylene. Preferably, the homo- or copolymer (A4) is relatively similar to the high isotactic homopolymer of propylene (A1). Thus, it is preferred that the homo- or copolymer (A4) is a homopolymer of propylene. Furthermore, if the properties of the homo- or copolymer (A4) are substantially different from those of the high isotactic homopolymer of propylene (A1), it is preferred that the amount of the homo- or copolymer (A4) does not exceed 2 wt.%, based on the total weight of the polypropylene composition.

The propylene homo- or copolymer (A4) preferably has a branching index g of at least 0.9. Thereby the propylene homo- or copolymer (A4) is preferably substantially free of long chain branches. Especially, the propylene homo- or copolymer (A4) does not contain long chain branches in a detectable amount.

The propylene homo- or copolymer (A4) can be produced according to the methods known in the art. As described above, according to one method the propylene homo- or copolymer (A4) is produced by homopolymerising propylene in the presence of a catalyst which is prepolymerised with a vinyl compound of the formula $CH_2=CH-CHR_1R_2$, wherein $R_1$ and $R_2$ are as defined above. It is particularly preferred that the vinyl compound is vinylcyclohexane. The propylene homo- or copolymer (A4) is thereby nucleated by the polymeric α-nucleating agent (A2). The propylene homo- or copolymer (A4) preferably comprises from 0.1 to 200 ppm of the polymeric α-nucleating agent (A2), preferably of poly(vinylcyclohexane), based on the total weight of the propylene homo- or copolymer (A4).

According to one suitable embodiment of the present invention, the polymerisation process and the catalyst for producing the propylene homo- or copolymer (A4) are similar to what is described above for the high isotactic homopolymer of propylene (A1). Thereby the propylene homo- or copolymer (A4) is formed on the catalyst containing the polymeric α-nucleating agent (A2).

According to an especially preferred embodiment of the present invention, the propylene homo- or copolymer (A4) is produced by homopolymerising propylene, or copolymerising propylene and one or more comonomers selected from the group consisting of ethylene and alpha-olefins having from 4 to 8 carbon atoms, in the presence of a Ziegler-Natta catalyst comprising a solid component containing magnesium, titanium, chlorine, and of an internal donor, such as a phthalate, a maleate or a citraconate, and of an aluminium alkyl, such as triethylaluminium, and of an external donor, such as a silicon ether, for instance, dicyclopentyldimethoxysilane, which catalyst has been prepolymerised with a small amount of the vinyl compound of the formula $CH_2=CH-CHR_1R_2$, such as vinylcyclohexane.

Propylene is then homopolymerised or copolymerised in the presence of the prepolymerised catalyst in one or more polymerisation steps. The homo- or copolymerisation of propylene can be conducted in any suitable polymerisation process known in the art, such as in slurry polymerisation or in gas phase polymerisation or in a combination thereof.

Suitable processes for producing the propylene homo- or copolymer (A4) containing the polymeric α-nucleating agent (A2) are disclosed, among others, in WO-A-99/24479, WO-A-00/68315, EP-A-1801157, EP-A-1801155 and EP-A-1818365.

Typically the propylene homo- or copolymer (A4) contains from 0.1 to 200 ppm of the polymeric α-nucleating agent (A2), preferably from 1 to 100 ppm, more preferably from 5 to 50 ppm of the polymeric α-nucleating agent (A2). Also in this embodiment it is preferred that the propylene homo- or copolymer (A4) is a propylene homopolymer, and it is further preferred that the propylene homopolymer has a relatively high content of isotactic material, as indicated, for instance, by a high percentage of cold xylene insoluble material, like at least 96 wt.%, or at least 97 wt.%, or at least 98 wt.%.

The polypropylene composition preferably further comprises from 0.1 to 9.99 wt.%, based on the total weight of the polypropylene composition, of a branched propylene polymer (A5) having a branching index g' of not more than 0.9. The branching index of the branched propylene polymer will be usually at least 0.1.

The term "branched propylene polymer" used in the present invention refers to a branched polypropylene differing from a linear polypropylene in that the polypropylene backbone has side chains whereas a non-branched polypropylene, i.e. a linear polypropylene, does not have side chains. The side chains have significant impact on the rheology of the polypropylene. Accordingly linear polypropylenes and branched polypropylenes can be clearly distinguished by its flow behaviour under stress.

The branching index g' defines the degree of branching and correlates with the amount of branches of a polymer. The branching index g' is defined as

$$g' = [IV]br / [IV]lin$$

in which g' is the branching index of the branched propylene polymer, [IV]br is the intrinsic viscosity of the branched propylene polymer, and [IV]lin is the intrinsic viscosity of a linear polypropylene having the same weight average molecular weight (within a range of ±10 %) as the branched propylene polymer. Thereby, a low g'-value is an indicator for a highly branched polymer. In other words, if the g'-value decreases, the branching of the polypropylene increases. Reference is made in this context to B.H. Zimm and W.H. Stockmeyer, J. Chem. Phys. 17,1301 (1949). The intrinsic viscosity needed for determining the branching index g' is measured according to DIN ISO 1628/1, October 1999 (in Decalin at 135 °C).

Branching can be achieved by using specific catalysts, i.e. specific single-site catalysts, or by chemical modification. Concerning the preparation of a branched propylene polymer obtained by the use of a specific catalyst reference is made to EP 1 892 264. With regard to a branched propylene polymer obtained by chemical modification it is referred to EP 0 879 830 A1. In such a case the branched propylene polymer is also called high melt strength polypropylene. The branched propylene polymer according to the present invention is obtained by chemical modification as described

in more detail below and thus is a high melt strength polypropylene (HMS-PP). Therefore, the terms "branched propylene polymer" and "high melt strength polypropylene (HMS-PP)" can be regarded in the present invention as synonyms. An accordingly prepared branched propylene polymer is also known as long chain branched propylene polymer. Therefore, the branched propylene polymer, i.e. the high melt strength polypropylene (HMS-PP), of the present invention has a F30 melt strength of more than 15.0 cN and a v30 melt extensibility of more than 200 mm/s, preferably has a F30 melt strength in the range of 15.0 to 50.0 cN, more preferably 20.0 to 45.0 cN, like 25.0 to 40.0 cN, and a v30 melt extensibility in the range of 200 to 300 mm/s, preferably 215 to 285 mm/s, more preferably 235 to 275 mm/s in order to provide a resulting polypropylene composition with good strain hardening effect. The F30 melt strength and the v30 melt extensibility are measured according to ISO 16790:2005.

The branched propylene polymer can be produced by any number of processes, e.g. by treatment of the unmodified propylene polymer with thermally decomposing radical forming agents and/or by treatment with ionizing radiation, where both treatments may optionally be accompanied or followed by a treatment with bi- or multifunctional ethylenically unsaturated monomers, e.g. butadiene, isoprene, dimethylbutadiene, divinylbenzene or trivinylbenzene.

"Bifunctional ethylenically unsaturated" as used herein means the presence of two non aromatic double bonds, as in e.g. divinylbenzene or cyclopentadiene. Only such bifunctional ethylenically unsaturated compounds are used which can be polymerised with the aid of free radicals. The bifunctionally unsaturated monomer is in its chemically bound state not actually "unsaturated", because the two double bonds are each used for a covalent bond to the polymer chains of the linear polypropylene.

Examples of the branched propylene polymer, are in particular:

polypropylenes modified by reaction with bismaleimido compounds in the melt (EP-A-0 574 801 and EP-A-0 574 804),

polypropylenes modified by treatment with ionizing radiation (EP 0 190 889 A2) polypropylenes modified by treatment with peroxides in the solid phase (EP 0 384 431 A2) or in the melt (EP 0 142 724 A2),

polypropylenes modified by treatment with bifunctional ethylenically unsaturated monomers under the action of ionizing radiation (EP A 0 678 527),

polypropylenes modified by treatment with bifunctional ethylenically unsaturated monomers in the presence of peroxides in the melt (EP A 0 688 817 and EP A 0 450 342).

From the above list, those branched propylene polymers are preferred, which are obtained by treatment with peroxides, especially when followed by a treatment with bifunctional ethylenically unsaturated monomers.

A preferred branched propylene polymer is obtained by mixing a linear polypropylene with 0.01 to 3 wt.% of an organic peroxide which is thermally decomposable under melting conditions of the polypropylene and heating and melting the mixture.

A still more preferred branched propylene polymer is obtained by mixing a linear polypropylene with 0.01 to 3 wt.% of an organic peroxide which is thermally decomposable under melting conditions of the polypropylene and with from 0.2 to 3 wt.% of a bifunctional ethylenically unsaturated monomer and heating and melting the mixture.

The bifunctional ethylenically unsaturated monomer may be added at any time before or during heating and melting the linear polypropylene/peroxide mixture. The bifunctional monomer may also be added to the linear polypropylene before it is mixed with the peroxide.

According to a preferred embodiment the bifunctional monomer is in gaseous or liquid state absorbed by the - still solid - polypropylene.

According to a preferred method, the branched propylene polymer is prepared by mixing a particulate linear propylene polymer with from 0.05 to 3 wt.%, based on the linear propylene polymer, of an organic peroxide which is thermally decomposable under melting conditions of the polypropylene (acyl peroxides, alkyl peroxides, peresters and/or peroxycarbonates). The peroxides may optionally be solvatised in an inert solvent. Mixing is performed at temperatures of from 30 to 100 °C, preferably of from 60 to 90 °C.

Mixing with the peroxide(s) is followed by contacting the polypropylene/peroxide mixture with the bifunctional ethylenically unsaturated monomer(s). The bifunctional monomer may be in gaseous or liquid state and may be applied in pure or diluted form, e.g. diluted with an inert gas or solvatised in an organic solvent. The bifunctional monomer is allowed to be absorbed by the particulate polypropylene at a temperature of from 20 to 120 °C, preferably of from 60 to 100 °C. Practical sorption times are from 10 to 1000 s, 60 to 600 s being preferred. This typically results in an absorbed amount of bifunctional monomer of from 0.01 to 10 wt.%, respectively from 0.05 to 2 wt.%, based on the linear propylene polymer.

The polypropylene/peroxide/monomer mixture is then heated and melted in an atmosphere comprising inert gas, e.g. $N_2$, and/or the bifunctional monomer, from sorption temperature to 210 °C. This causes the peroxides to

decompose and to generate free radicals at the propylene polymer chains which react with the bifunctional monomers.

The melt is heated up to 280 °C in order to remove unreacted monomers and decomposition products and finally the melt is pelletised.

The linear polypropylene comprises propylene homopolymers, copolymers of propylene and ethylene and/or $\alpha$ -olefins with 4 to 18 carbon atoms and mixtures of such homo- and copolymers. According to a preferred embodiment of the present, invention the branched propylene polymer is prepared based on a propylene homopolymer with low ash content, preferably an ash content of <60 ppm.

According to a still further preferred embodiment of the present invention, the branched propylene polymer (A5) is prepared based on a high isotactic homopolymer of propylene like the high isotactic homopolymer of propylene (A1), the high isotactic homopolymer of propylene being linear.

The particulate linear propylene polymer may have the shape of powders, granules or grit.

The above described process preferably is a continuous method, performed in continuous reactors, mixers, kneaders and extruders. Batchwise production of the modified propylene polymer, however, is feasible as well.

Preferably the bifunctional monomers are absorbed by the linear propylene polymer from the gas phase.

The bifunctional ethylenically unsaturated monomers preferably are C4 to C10 dienes and/or C7 to C10 divinyl compounds. Especially preferred are butadiene, isoprene, dimethyl-butadiene or divinylbenzene.

The following peroxides are suitable for the above described process:

acyl peroxides, such as dibenzoyl peroxide, benzoyl peroxide, 4-chlorobenzoyl peroxide, 3-methoxybenzoyl peroxide and methylbenzoyl peroxide;

alkyl peroxides such as allyl tert-butyl peroxide, 2,2-di(tert-butylperoxy)butane, di-tert-amyl peroxide, I,I-bis(tert-butylperoxy)-3,3,5 trimethylcyclohexane, n-butyl-4,4-bis(tert-butylperoxy)valerate, diisopropylaminomethyl tert-amyl peroxide, dimethylaminomethyl tert-amyl peroxide, diethylaminomethyl tert-butyl peroxide, dimethylamino methyl tert-butyl peroxide, 1,1-di(tert-amylperoxy) cyclohexane, tert-amyl peroxide, tert-butyl cumyl peroxide, methyl isobutyl ketone peroxide, 2,2- di(4,4-di(tert-butylperoxy)cyclohexyl)propane, tert-butyl peroxide and 1- hydroxybutyl n-butyl peroxide;

peresters and peroxycarbonates, such as tert-butyl peroxyacetate, tert-butyl peroxydiethylacetate, cumyl peracetate, cumyl perpropionate, cyclohexyl peracetate, di-tert-butyl peradipate, di-tert-butyl perazelate, di-tert-butyl perglutarate, di-tert-butyl perphthalate, di-tert-butyl persebacate, 4-nitrocumyl perpropionate, 1-phenylethyl perbenzoate, phenylethyl nitroperbenzoate, tert-butyl bicyclo[2.2.1]heptane percarboxylate, tert-butyl 4-carbomethoxy perbutyrate, tert- amyl peroxy 2-ethylhexyl carbonate, tert-amyl peroxy-2-ethylhexanoate, tert-butyl cyclobutane percarboxylate, 1,4-di(tert-butylperoxycarbo)cyclohexane, 1,1-di(tert- butylperoxy)-3,3,5-trimethylcyclohexane, 1,1-di(tert-butylperoxy)cyclohexane, tert-butyl cyclohexylperoxycarboxylate, tert-butyl cyclopentylpercarboxylate, tert- butyl cyclopropanepercarboxylate, tert-butyl dimethylpercinnamate, tert-butyl 2-(2,2-diphenylvinyl)perbenzoate, tert-butyl peroxy-2-ethylhexanoate, tert-butyl peroxy-3,5,5-trimethylhexanoate, tert-butyl 4-methoxyperbenzoate, tert-butyl peroxybenzoate, tert-butyl pernaphthoate, tert-butylperoxy isopropyl carbonate, tert-butylperoxy 2-ethylhexyl carbonate, tert-butyl pertoluate, tert-butyl 1- phenylcyclopropyl percarboxylate, tert-butyl 2-propylperpenten-2-oate, tert-butyl 1-methylcyclopropylpercarboxylate, tert-butyl 4-nitrophenylperacetate, tert-butyl nitrophenyl peroxycarbamate, tert-butyl A-succinimido percarboxylate, tert-butyl percrotonate, tert-butylpermaleic acid, tert-butyl permethacrylate, tert-butyl peroctoate, tert-butyl peroxyisobutyrate, tert-butyl peracrylate, tert-butyl perpropionate;

and mixtures of these peroxides.

Particularly preferred are dibenzoyl peroxide, tert-butyl peroxy-2-ethylhexanoate, tert-amyl peroxy-2-ethylhexanoate, tert-butyl peroxydiethylacetate, 1,4-di(tert-butylperoxycarbo)cyclohexane, tert-butyl peroxyisobutyrate, 1,1-di(tert-butylperoxy)-3,3,5-trimethyl-cyclohexane, methyl isobutyl ketone peroxide, 2,2-di(4,4-di(tert- butylperoxy)cyclohexyl)propane, 1,1-di(tert-butylperoxy)cyclohexane, tert-butyl peroxy-3,5,5-trimethylhexanoate, tert-amyl peroxy 2-ethylhexyl carbonate, 2,2-di(tert-butylperoxy)butane, tert-butylperoxy isopropyl carbonate, tert-butylperoxy 2-ethylhexyl carbonate, tert-butyl peroxyacetate, tert-butyl peroxybenzoate, di-tert-amyl peroxide and mixtures thereof.

These peroxides are preferred, because their mode of action was observed to be a compromise between polymer-chain-length-reducing degradation, which is undesireable in this instance, and the desired long chain branching.

Preferably, the polypropylene composition further comprises from 0.01 to 1 wt.%, preferably from 0.05 to 0.8 wt.%, based on the total weight of the polypropylene composition, of additives (A6).

The additives (A6) used according to the present invention are preferably selected from the group consisting of antioxidants, stabilisers, acid scavengers, and mixtures thereof. In the present application, the nucleating agents as disclosed herein are not considered as additives.

The high isotactic homopolymer of propylene (A1) according to the present invention has an isotacticity of from 93 to 98 %. It has been found that especially when homopolymers of propylene having an isotacticity of from 95 to 98 % are used in making films, the polymer is more prone to degradation than a conventional homopolymer of propylene having an isotacticity of from 90 to 94 %. Therefore, more effective stabilisation is preferred for the high isotactic homopolymer of propylene (A1).

The antioxidants and stabilisers used in the present invention are preferably selected from the group of hindered phenols and more preferably from the group of hindered phenols not containing phosphorous or sulphur.

The antioxidants and stabilisers used in the present invention are especially preferably one or more compounds selected from the group consisting of 1,3,5-trimethyl-2,4,6-tris(3,5-di-tert-butyl-4-hydroxybenzyl)benzene (sold under trade names Irganox 1330, Anox 330, Ethanox 330 and Kinox-30), pentaerythrityl-tetrakis(3-(3<,>,5'-di-tert. butyl-4-hydroxyphenyl)-propionate (sold under trade names Irganox 1010, Anox 20, Ethanox 310TF and Kinox-10), octadecyl 3-(3',5'-di-tert. butyl-4-hydroxyphenyl)propionate (sold under trade names Irganox 1076, Anox PP 18 and Kinox-16), butylhydroxytoluene (sold under trade names Ionol CP and Vulkanox BHT), I,3,5-tris(3',5'-di-tert. butyl-4'- hydroxybenzyl)-isocyanurate (sold under trade names Irganox 3114, Anox IC-14, Ethanox 314 and Kinox-34), and 2,5,7,8-tetramethyl-2(4<,>,8<,>,12'-trimethyltridecyl)chroman-6-ol (sold under trade names Irganox E 210 and alpha-tocopherol).

The antioxidants and stabilisers are preferably present in a total amount of from 500 to 8000 ppm, based on the total weight of the polypropylene composition. More preferably, antioxidants and stabilisers are present in a total amount of from 800 to 7000 ppm, still more preferably of from 1000 to 6000 ppm, and in particular from 1500 to 6000 ppm, based on the total weight of the polypropylene composition. In particular, the antioxidants and stabilisers preferably do not contain phosphorous containing secondary antioxidants, such as tris(2,4-ditert-butylphenyl)phosphite, because such compounds increase the dissipation in the final capacitor.

Acid scavengers are typically salts of organic acids, such as stearates. They have the function of neutralising acids in polymer. Examples of such compounds are calcium stearate, zinc stearate and zinc oxide. Acid scavengers are typically used in an amount of from 50 ppm to 2000 ppm, more preferably from 50 ppm to 1000 ppm.

The invention further provides a thermally treated biaxially oriented polypropylene film obtained by the process according to the invention.

All preferred embodiments of the process according to the invention are also preferred embodiments of the thermally treated biaxially oriented polypropylene film obtained by the process according to the invention, if applicable.

Preferably, the thermally treated biaxially oriented polypropylene film according to the present invention comprises at least one layer comprising the polypropylene composition as described in all embodiments above. Preferably the layer comprising the polypropylene composition contains from 90 to 100 wt.% of the polypropylene composition, based on the total weight of the film layer. More preferably, the layer contains from 95 to 100 wt.% of the polypropylene composition and even more preferably from 98 to 100 wt.%, such as 99 to 100 wt.%. Especially preferably, the layer consists of the polypropylene composition.

The invention further provides a capacitor comprising an insulation film, the insulation film comprising a layer of the thermally treated biaxially oriented polypropylene film according to the invention.

The invention further provides the use of the thermally treated biaxially oriented film according to the invention for increasing the permittivity and/or improving the dielectrical breakdown field strength of an insulation film of a capacitor.

Finally, the invention further provides the use of the thermally treated biaxially oriented polypropylene film according to the invention as a layer of an insulation film of a capacitor.

All preferred embodiments of the process according to the invention as described above are also preferred embodiments of the capacitor according to the invention and the use of the thermally treated biaxially oriented film according to the invention.

In the following the present invention is further illustrated by means of examples.

Figure 1 shows BDS (broadband dielectric spectroscopy) measurements on inventive examples !E1 and IE2 and comparative example CE, and

Figure 2 shows the results of the SAXS measurements on IE1.

**1. Definitions/Measuring Methods**

The following definitions of terms and determination methods apply for the above general description of the invention as well as to the below examples unless otherwise defined.

**a) Melt flow rate**

Melt flow rate MFR2 was determined according to ISO 1133 at 230 °C under a load of 2.16 kg.

**b) Quantification of microstructure by NMR spectroscopy**

Quantitative nuclear magnetic resonance (NMR) spectroscopy was used to quantify the isotacticity and regio-regularity of the propylene homopolymers.

Quantitative $^{13}C$ {$^1H$} NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125 °C using nitrogen gas for all pneumatics.

Approximately 200 mg of material (propylene homopolymer) was dissolved in 1,2-tetrachloroethane-d2 (TCE-d2). To ensure a homogenous solution, after initial sample preparation in a heat block, the NMR tube was further heated in a rotary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, 15 B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra. Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

By pentad isotacticity is meant the fraction of isotactic pentads (mmmm).

**c) Ash content**

The ash content of the polymer was determined by combusting the polymer in a weighed platinum crucible. About 100 grams of polymer is weighed into the crucible. The crucible is then heated in a Bunsen burner flame so that the polymer slowly burns. After the polymer is completely burned the crucible is cooled, dried and weighed. The ash content is then the weight of the residue divided by the weight of the polymer sample. At least two measurements are made and if the difference between the measurements is more than 7 ppm then a third measurement is made.

**d) Melt strength and melt extensibility**

The test described herein follows ISO 16790:2005.

The strain hardening behaviour is determined by the method as described in the article "Rheotens-Mastercurves and Drawability of Polymer Melts", M. H. Wagner, Polymer Engineering and Sience, Vol. 36, pages 925 to 935. The strain hardening behaviour of polymers is analysed by Rheotens apparatus (product of Gottfert, Siemensstr.2, 74711 Buchen, Germany) in which a melt strand is elongated by drawing down with a defined acceleration.

The Rheotens experiment simulates industrial spinning and extrusion processes. In principle a melt is pressed or extruded through a round die and the resulting strand is hauled off. The stress on the extrudate is recorded, as a function of melt properties and measuring parameters (especially the ratio between output and haul-off speed, practically a measure for the extension rate). The materials were extruded with a lab extruder FLAAKE Polylab system and a gear pump with cylindrical die (LID = 6.0/2.0 mm). For measuring F30 melt strength and v30 melt extensibility, the pressure at the extruder exit (= gear pump entry) is set to 30 bars by by-passing a part of the extruded polymer. For measuring F200 melt strength and v200 melt extensibility, the pressure at the extruder exit (= gear pump entry) is set to 200 bars by by-passing a part of the extruded polymer. The gear pump was pre-adjusted to a strand extrusion rate of 5 mm/s, and the melt temperature was set to 200 °C. The spinline length between die and Rheotens wheels was 80 mm. At the beginning of the experiment, the take-up speed of the Rheotens wheels was adjusted to the velocity of the extruded polymer strand (tensile force zero): Then the experiment was started by slowly increasing the take-up speed of the Rheotens wheels until the polymer filament breaks. The acceleration of the wheels was small enough so that the tensile force was measured under quasi-steady conditions. The acceleration of the melt strand (2) drawn down is 120 mm/sec$^2$. The Rheotens was operated in combination with the PC program EXTENS. This is a real-time data-acquisition program, which displays and stores the measured data of tensile force and drawdown speed. The end points of the Rheotens curve (force versus pulley rotary speed), where the polymer strand ruptures, are taken as the F30 melt strength and v30

melt extensibilty values, or the F200 melt strength and v200 melt extensibility values, respectively.

**e) Intrinsic viscosity**

The intrinsic viscosity needed for determining the branching index g' is measured according to DIN ISO 1628/1, October 1999 (in Decalin at 135 °C).

**f) Broadband dielectric spectroscopy (BDS)**

BDS measurements ware performed using a Novocontrol Alpha frequency analyser, in the frequency range of $10^{-1}$ to $10^{6}$ Hz, at different temperatures in the range 20-130 °C with an error of $\pm 0.1$ °C, at atmospheric pressure and under nitrogen atmosphere. The film samples were coated with a metallic layer (50 nm Au, pressure $2 \times 10^{-2}$ mbar, using Magnetron Sputtering) to achieve a better contact of the film's surface with the electrodes, and measured with a pin as the upper electrode for better contact, while a round electrode with a diameter of 4 mm was used on the bottom side. The pin electrode has a rounded tip characterized by a curvature $\kappa$=0.002 $\mu m^{-1}$ (radius of curvature $R_{\kappa}$=500 $\mu$m). This leads to a small contact area between the Au layer and the pin electrode with a diameter d~50 $\mu$m. Also, the round tip exhibits very small roughness (<1 $\mu$m) and it has a controllable pressure ensuring that its use will not lead to any destruction of the Au coating during the BDS measurements. Each measurement of dielectric permittivity, $\varepsilon'$, and losses, $\varepsilon''$, was carried out six times, and average values were recorded. The loss tangent is then calculated as $\tan\delta = \varepsilon''/\varepsilon'$.

The effects of thermal treatment on the dielectric properties of BOPP films were examined using the following thermal protocol: The film was heated with a rate of 5 °C/min from room temperature to 110 °C. Following heating, the sample was kept at 110 °C in the BDS cell for an annealing time, $t_{ann}$=120 min. After annealing, the sample was cooled back to room temperature at 5 °C/min. The dielectric properties were measured at the beginning of the cycle, at 100 °C during heating, at 110 °C, and at room temperature after completing the cycle.

**e) Small-angle X-ray scattering (SAXS)**

SAXS measurements were made using a $CuK_{\alpha}$ radiation (Rigaku MicroMax 007 X-ray generator; Osmic Confocal Max-Flux curved multilayer optics). 2D diffraction patterns were recorded on an Mar345 image plate detector at a sample-detector distance of 2060 mm. Intensity distributions as a function of the modulus of the total scattering vector, $q = (4\pi/\lambda)\sin(2\theta/2)$, where $2\theta$ is the scattering angle, were obtained by radial averaging of the 2D datasets. Several stacks of BOPP films of thickness of about 0.3 mm were used in the X-ray beam. To investigate the effect of annealing, SAXS measurements upon heating and cooling were employed for the BOPP films. The samples were heated from 30 °C to 150 °C followed by cooling to 30 °C. The cavity size in BOPP films was extracted using the Lorentz-corrected curves.

**2. Examples**

**a) Materials**

The following materials and compounds are used in the Examples.

iHPP high isotactic homopolymer of propylene, produced according to Reference Example 1 of WO 2017/064224

nPP nucleated propylene homopolymer, produced according to Reference Example 3 of WO 2017/064224

HMS high melt strength polypropylene, a branched propylene polymer, produced according to Reference Example 4 of WO 2017/064224

The $\beta$-nucleating agent used in the examples is commercially available $\beta$ - nucleating agent Quinacridonequinone CGNA-7588 from BASF.

Pentaerythrityl-tetrakis(3-(3',5'-di-tert.butyl-4-hydroxyphenyl)-propionate, commercially available as Irganox 1010 from BASF.

**b) Polypropylene Compositions**

Inventive example IE1 is a polypropylene composition being a melt blend of 99.5 wt.% of iHPP and 0.5 wt.% of nPP, 1000 ppm of butylhydroxytoluene, 75 ppm of calcium stereate and 4500 ppm of Irganox 1010.IE1 has a MFR2 of 3.3 g/10 min, an isotactic pentad fraction of 97.1% and an ash content of 17%.

Inventive example IE2 is a polypropylene composition being a melt blend of 98.9 wt.% of iHPP, 1.0 wt.% of HMS, and 0.0001 wt.% (1 ppm) of the β-nucleating agent, 1000 ppm of butylhydroxytoluene, 75 ppm of calcium stereate and 4500 ppm of Irganox 1010.

IE2 has a MFR2 of 3.3 g/10 min, an isotactic pentad fraction of 97.4% and an ash content of 13%.

Comparative example CE is a non-nucleated polypropylene composition being a melt blend of 99.5 wt.% of iHPP, 1000 ppm of butylhydroxytoluene, 75 ppm of calcium stereate and 4500 ppm of Irganox 1010.

CE has a MFR2 of 3.3 g/10 min, an isotactic pentad fraction of 97.1% and an ash content of 17%.

The above polypropylene compositions were melt blended on a twin screw extruder at a melt temperature of 235 °C.

processed using the pilot scale biaxial orientation line owned and operated by Bruckner Maschinenbau GmbH including a MDO (machine direction orientation) unit installed between the cast film extrusion and the tenter frame. Films were extruded at a rate of 35 kg/h onto a chill roll held at 90 °C into sheet of 240 pm thick with chill roll/film speed of 10 m/min. This cast film was continuously fed into the MDO unit which consisted of 12 rolls, of which the first six were heated from 95 to 130 °C to preheat the film, the subsequent two were held at 140 °C for drawing and the last four are held between 110-124 °C for annealing. The MD draw step was accomplished between the 8$^{th}$ and 9$^{th}$ roll, running rolls 9 to 12 at 50 m/min thereby creating the MDO or MD drawn film. The MDO film was continuously fed into the tenter frame using 180-175 °C for pre heating, 175-165 °C for drawing and 165-170 °C for relaxation. In the tenter operation, the MD clip-to-clip distance was constant and the MDO film was only drawn in TD in the diverging draw zone of the tenter. The engineering draw ratio in MD and TD was 5.0 by 9.0.

The obtained BOPP films are in the following referred to as "SEQ" for sequential orientation, e.g. "SEQ6.5x9.0" for a draw ratio of 6.5 in machine direction and a draw ratio of 9.0 in transverse direction, see Table 1 below. All tested BOPP films had a thickness of about 4.8 μm. This thickness is obtained by providing (non-oriented) flat films with different thicknesses and accordingly applying different draw ratios, varying also machine direction (MD) and transverse direction (TD), to obtain BOPP films with the desired thickness of about 4.8 μm.

Table 1: Processing and thickness of obtained BOPP films

| | **IE1** | **IE2** | **CE** |
|---|---|---|---|
| Draw ratio | SEQ5.0x9.0 | SEQ5.0x9.0 | SEQ5.0x9.0 |
| Thickness (μm) | 4.9 | 4.85 | 4.8 |

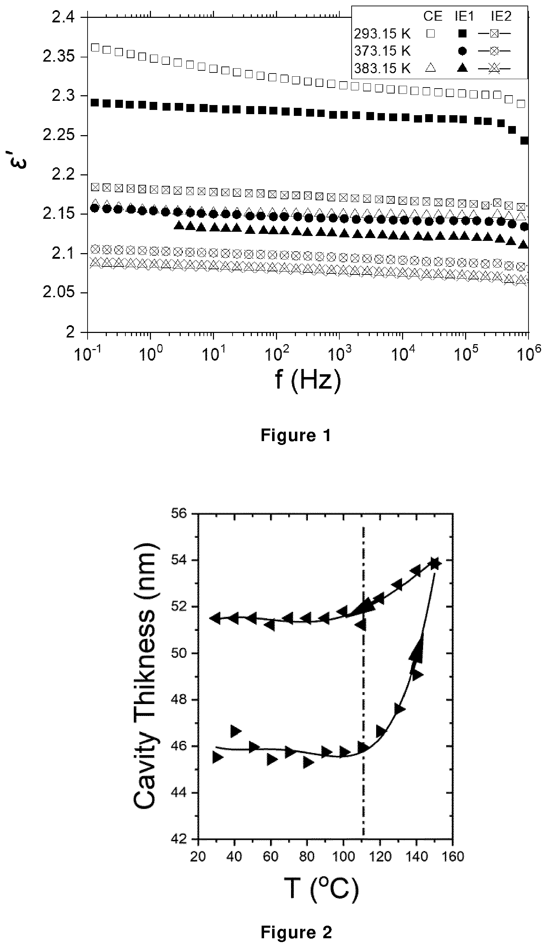

The BOPP films of Inventive Examples !E1 and IE2 as well as of the comparative example CE were subsequently thermally treated as follows. The BOPP films were brought into the BDS apparatus as described above. The film was heated with a rate of 5 °C/min from room temperature to an annealing temperature $T_{ann}$ of 110 °C. Following heating, the sample was kept at 110 °C in the BDS cell for an annealing time, $t_{ann}$=120 min. After annealing, the sample was cooled back to room temperature at 5 °C/min. The dielectric properties were measured at the beginning of the cycle, at 100 °C during heating, at 110 °C, and at room temperature after completing the cycle, see Figure 1 below. Results of the thermal treatment are given in Table 2 below.

Table 2: Results of the thermal treatment on dielectric properties

| | **CE** | **IE1** | **IE2** |
|---|---|---|---|
| Temperature (K) | T·ε' (K) @ f≈10$^3$ Hz | T·ε' (K) @ f≈10$^3$ Hz | T·ε' (K) @ f≈10$^3$ Hz |
| 293.15 (20 °C) | 683 | 668 | 637 |
| 373.15 (100 °C) | n.a. | 801 | 776 |
| 383.15 (110 °C) | 823 | 812 | 787 |
| 293.15 (20 °C after cooling) | 653 | 644 | 621 |
| Δ(T·ε') 293.15 → 383.15 K | 140 | 144 | 150 |

For weakly interacting dipoles, the expectation is that ε' would decrease on heating according to the relation:

$$\varepsilon_s - \varepsilon_\infty = \frac{1}{3\varepsilon_0} F \frac{|\vec{\mu}|^2}{k_B T} \frac{N}{V}$$

where N is the number of dipoles in the system, $\mu$ is the dipole moment, $\varepsilon_0$=8.854·10$^{-12}$ F/m is the vacuum dielectric permittivity and $\varepsilon s$, $\varepsilon\infty$ are the limits of the dielectric permittivity at low and high frequencies, respectively. F corresponds to the Onsager correction factor which is introducing the contribution of a polarized environment surrounding the dipoles. We define the product $T\cdot\varepsilon'$ as comparison parameter. According to this equation $T\cdot\varepsilon' \approx$ *constant.*

The product $\Delta(T\cdot\varepsilon')$ is defined as comparison parameter. In theory, this parameter $T\cdot\varepsilon'$, i.e. temperature times dielectric permittivity, should be constant. However, IE1 and IE2 have a significant increase in this parameter compared to CE, as shown in Table 2. This holds for the frequency range $10^{-1}$ - $10^6$ Hz; an example at $10^3$ Hz is shown in the table. This change in the dielectric permittivity is attributed to internal stresses of the film produced at high temperatures (T>110 °C) as well as to irreversible increase of the cavity size, which will be discussed below.

Results of the SAXS measurements on IE1 are shown in Figure 2. As can be seen, the initial cavity thickness at room temperature is about 47 nm. Increasing the temperature to 150 °C leads to an increase in cavity thickness to around 54 nm, with the increase occurring at around 130 °C. On cooling back to room temperature, the cavity thickness remains at a higher level, thus evidencing that non-reversible structural changes have taken place.

## Claims

**1.** A process for producing a thermally treated biaxially oriented polypropylene film, the process comprising the steps of:

(A) providing a polypropylene composition comprising

(A1) from 90 to 99.99 wt.%, based on the total weight of the polypropylene composition, of a homopolymer of propylene having a content of isotactic pentad fraction of from 93 to 98 % determined by NMR spectroscopy and a melt flow rate MFR2 of from 0.4 to 10 g/10 min determined according to ISO 1133, and
(A2) from 0.0000001 to 1 wt.% of a polymeric $\alpha$-nucleating agent based on the total weight of the polypropylene composition, and/or
(A3) from 0.0000001 to 0.0002 wt.% of a $\beta$-nucleating agent based on the total weight of the polypropylene composition,

(B) extruding the polypropylene composition to a film,
(C) orienting the film simultaneously or sequentially to obtain a biaxially oriented polypropylene film,
(D) thermally treating the biaxially oriented polypropylene film by

(D1) heating the biaxially oriented polypropylene film to an annealing temperature $T_{ann}$, wherein $T_{ann}$ is between 80 and 150 °C,
(D2) annealing the biaxially oriented polypropylene film at the annealing temperature $T_{ann}$ for a annealing time $t_{ann}$ to obtain the thermally treated biaxially oriented polypropylene film, wherein $t_{ann}$ is between 10 and 140 min,
(D3) cooling the thermally treated biaxially oriented polypropylene film,

(E) recovering the thermally treated biaxially oriented polypropylene film.

**2.** The process according to claim 1, wherein the polypropylene composition further comprises
(A4) up to 9.99 wt.%, based on the total weight of the polypropylene composition, of a propylene homo- or copolymer other than the homopolymer of propylene (A1).

**3.** The process according to any one of the preceding claims, wherein the polypropylene composition comprises
(A5) from 0.1 to 9.99 wt.%, based on the total weight of the polypropylene composition, of a branched propylene polymer having a branching index g' of not more than 0.9 measured as described in the specification.

**4.** The process according to any one of the preceding claims, wherein the polypropylene composition further comprises (A6) from 0.01 to 1 wt.%, based on the total weight of the polypropylene composition, of additives.

**5.** The process according to any one of the preceding claims, wherein in step (C) the film is sequentially orientated, and sequential orientation is performed either first in machine direction (MD) and subsequently in transverse direction (TD) or first in traverse direction (TD) and subsequently in machine direction (MD).

**6.** The process according to any one of the preceding claims, wherein a draw ratio in machine direction (MD) is at

least 8.0 to 20.0 and/or wherein a draw ratio in transverse direction (TD) is at least 8.0 to 20.0.

**7.** The process according to any one of the preceding claims, wherein the polymeric α-nucleating agent (A2) is a polymer of a vinyl compound of the formula $CH_2$=CH-$CHR_1R_2$ wherein $R_1$ and $R_2$ together form a 5- or 6-membered saturated, unsaturated, or aromatic ring, or independently represent an alkyl group comprising 1 to 4 carbon atoms.

**8.** The process according to claim 7, wherein the polymeric α-nucleating agent (A2) is selected from the group consisting of polyvinylcyclohexane, poly(3-methyl-1-butene) and mixtures thereof.

**9.** The process according to any one of the preceding claims, wherein the β-nucleating agent is selected from the group consisting of 5,12-dihydro-quino[2,3-b]acridine-7,14-dione, quino[2,3-b] acridine-6, 7, 13,14(5H, 12H)-tetrone, 5,6,12,13-tetrahydroquino[2,3-b]acridine-7,14-dione, and mixtures thereof.

**10.** The process according to any one of the preceding claims, wherein the film has a thickness between 0.5 to 10 μm.

**11.** The process according to any one of the preceding claims, wherein the thermally treated biaxially oriented polypropylene film or the biaxially oriented polypropylene film further comprises a metal layer.

**12.** Thermally treated biaxially oriented polypropylene film obtained by the process according to any one of claims 1 to 11.

**13.** A capacitor comprising an insulation film, the insulation film comprising a layer of the thermally treated biaxially oriented polypropylene film according to claim 12.

**14.** Use of the thermally treated biaxially oriented film according to claim 12 for increasing the permittivity and/or improving the dielectrical breakdown field strength of an insulation film of a capacitor.

**15.** Use of the thermally treated biaxially oriented polypropylene film according to claim 12 as a layer of an insulation film of a capacitor.

## Patentansprüche

**1.** Verfahren zum Erzeugen einer thermisch behandelten biaxial ausgerichteten Polypropylenfolie, wobei das Verfahren die folgenden Schritte umfasst:

(A) Vorsehen einer Polypropylen-Zusammensetzung, die umfasst:

(A1) von 90 bis 99,99 Gew.-%, basierend auf dem Gesamtgewicht der Polypropylen-Zusammensetzung, eines Homopolymers von Propylen mit einem Anteil einer isotaktischen Pentad-Fraktion von 93 bis 98%, bestimmt durch eine NMR-Spektroskopie, und einer Schmelzflussrate (MFR2) von 0,4 bis 10 g/10 min, bestimmt gemäß ISO 1133, und
(A2) von 0,0000001 bis 1 Gew.-% eines polymerischen α-Kernbildungsmittels, basierend auf dem Gesamtgewicht der Polypropylen-Zusammensetzung, und/oder
(A3) von 0,0000001 bis 0,0002 Gew.-% eines β-Kernbildungsmittels basierend auf dem Gesamtgewicht der Polypropylenzusammensetzung,

(B) Extrudieren der Polypropylen-Zusammensetzung zu einer Folie,
(C) Ausrichten der Folie gleichzeitig oder sequentiell für das Erhalten einer biaxial ausgerichteten Polypropylenfolie,
(D) thermisches Behandeln der biaxial ausgerichteten Polypropylenfolie durch:

(D1) Erhitzen der biaxial ausgerichteten Polypropylenfolie zu einer Glühtemperatur $T_{ann}$, wobei $T_{ann}$ zwischen 80 und 150°C beträgt,
(D2) Glühen der biaxial ausgerichteten Polypropylenfolie mit der Glühtemperatur $T_{ann}$ für eine Glühzeit $t_{ann}$, um die thermisch behandelte biaxial ausgerichtete Polypropylenfolie zu erhalten, wobei $t_{ann}$ zwischen 10 und 140 min beträgt,
(D3) Abkühlen der thermisch behandelten biaxial ausgerichteten Polypropylenfolie,

(E) Entnehmen der thermisch behandelten biaxial ausgerichteten Polypropylenfolie.

2. Verfahren nach Anspruch 1, wobei die Polypropylen-Zusammensetzung weiterhin umfasst:
(A4) bis zu 9,99 Gew.-%, basierend auf dem Gesamtgewicht der Polypropylen-Zusammensetzung, eines anderen Propylen-Homo- oder Copolymers als des Homopolymers von Propylen (A1).

3. Verfahren nach einem der vorstehenden Ansprüche, wobei die Polypropylen-Zusammensetzung umfasst:
(A5) von 0,1 bis 9,99 Gew.-%, basierend auf dem Gesamtgewicht der Polypropylen-Zusammensetzung, eines verzweigten Propylen-Polymers mit einem Verzweigungsindex g' von nicht mehr als 0,9, gemessen wie in der Beschreibung beschrieben.

4. Verfahren nach einem der vorstehenden Ansprüche, wobei die Polypropylen-Zusammensetzung weiterhin umfasst:
(A6) von 0,01 bis 1 Gew.-%, basierend auf dem Gesamtgewicht der Polypropylen-Zusammensetzung, von Zusätzen.

5. Verfahren nach einem der vorstehenden Ansprüche, wobei in dem Schritt (C) die Folie sequentiell ausgerichtet wird und die sequentielle Ausrichtung entweder zuerst in der Maschinenrichtung (MD) und dann in der Querrichtung (TD) oder zuerst in der Querrichtung (TD) und dann in der Maschinenrichtung (MD) durchgeführt wird.

6. Verfahren nach einem der vorstehenden Ansprüche, wobei das Zugverhältnis in der Maschinenrichtung (MD) wenigstens 8,0 bis 20,0 beträgt und/oder wobei das Zugverhältnis in der Querrichtung (TD) wenigstens 8,0 bis 20,0 beträgt.

7. Verfahren nach einem der vorstehenden Ansprüche, wobei das polymerische α-Kernbildungsmittel (A2) ein Polymer einer Vinylverbindung der Formel $CH_2=CH-CHR_1R_2$ ist, wobei $R_1$ und $R_2$ zusammen einen 5- oder 6-gliedrigen gesättigten, ungesättigten oder aromatischen Ring bilden oder jeweils unabhängig eine Alkylgruppe mit 1 bis 4 Kohlenstoffatomen wiedergeben.

8. Verfahren nach Anspruch 7, wobei das polymerische α-Kernbildungsmittel (A2) aus der Gruppe ausgewählt ist, die aus Polyvinylcyclohexan, Poly(3-methyl-1-buten) und Mischungen aus diesen besteht.

9. Verfahren nach einem der vorstehenden Ansprüche, wobei das β-Kernbildungsmittel aus der Gruppe ausgewählt ist, die aus 5,12-Dihydroquino[2,3-b]acridin-7,14-dion, Quino[2,3-b]acridin-6,7,13,14(5H,12H)-tetron, 5,6,12,13-Tetrahydroquino[2,3-b]acridin-7,14,dion und Mischungen aus diesen besteht.

10. Verfahren nach einem der vorstehenden Ansprüche, wobei die Folie eine Dicke zwischen 0,5 und 10 μm aufweist.

11. Verfahren nach einem der vorstehenden Ansprüche, wobei die thermisch behandelte biaxial ausgerichtete Polypropylenfolie oder die biaxial ausgerichtete Polypropylenfolie weiterhin eine Metallschicht umfasst.

12. Thermisch behandelte biaxial ausgerichtete Polypropylenfolie, die durch das Verfahren gemäß einem der Ansprüche 1 bis 11 erhalten wird.

13. Kondensator, der einen Isolationsfilm umfasst, wobei der Isolationsfilm eine Schicht aus der thermisch behandelten biaxial ausgerichteten Polypropylenfolie gemäß dem Anspruch 12 umfasst.

14. Verwendung der thermisch behandelten biaxial ausgerichteten Folie gemäß Anspruch 12 für das Erhöhen der Durchlässigkeit und/oder das Verbessern der dielektrischen Durchbruchfeldstärke einer Isolationsfolie eines Kondensators.

15. Verwendung der thermisch behandelten biaxial ausgerichteten Folie gemäß Anspruch 12 als einer Schicht einer Isolationsfolie eines Kondensators.

## Revendications

1. Procédé de production d'un film de polypropylène orienté biaxialement traité thermiquement, le procédé comprenant les étapes suivantes :

(A) la fourniture d'une composition de polypropylène comprenant

(A1) de 90 à 99,99 % en poids, par rapport au poids total de la composition de polypropylène, d'un homopolymère de propylène ayant une teneur en fraction pentadique isotactique de 93 à 98 % déterminée par spectroscopie RMN et un indice de fluidité à chaud MFR2 de 0,4 à 10 g/10 min déterminé selon la norme ISO 1133, et
(A2) de 0,0000001 à 1 % en poids d'un agent de nucléation $\alpha$ polymérique par rapport au poids total de la composition de polypropylène, et/ou
(A3) de 0,0000001 à 0,0002 % en poids d'un agent de nucléation $\beta$ par rapport au poids total de la composition de polypropylène,

(B) l'extrusion de la composition de polypropylène en un film,
(C) l'orientation du film simultanément ou séquentiellement pour obtenir un film de polypropylène orienté biaxialement,
(D) le traitement thermique du film de polypropylène orienté biaxialement par

(D1) le chauffage du film de polypropylène orienté biaxialement jusqu'à une température de recuit $T_{recuit}$, $T_{recuit}$ étant comprise entre 80 et 150 °C,
(D2) le recuit du film de polypropylène orienté biaxialement à la température de recuit $T_{recuit}$ pendant une durée de recuit $t_{recuit}$ pour obtenir le film de polypropylène orienté biaxialement traité thermiquement, $t_{recuit}$ étant comprise entre 10 et 140 min,
(D3) le refroidissement du film de polypropylène orienté biaxialement traité thermiquement,

(E) la récupération du film de polypropylène orienté biaxialement traité thermiquement.

2. Procédé selon la revendication 1, dans lequel la composition de polypropylène comprend en outre
(A4) jusqu'à 9,99 % en poids, par rapport au poids total de la composition de polypropylène, d'un homopolymère ou copolymère de propylène autre que l'homopolymère de propylène (A1).

3. Procédé selon l'une quelconque des revendications précédentes, dans lequel la composition de polypropylène comprend
(A5) de 0,1 à 9,99 % en poids, par rapport au poids total de la composition de polypropylène, d'un polymère de propylène ramifié ayant un indice de ramification g' inférieur ou égal à 0,9, mesuré comme indiqué dans la description.

4. Procédé selon l'une quelconque des revendications précédentes, dans lequel la composition de polypropylène comprend en outre (A6) de 0,01 à 1 % en poids, par rapport au poids total de la composition de polypropylène, d'additifs.

5. Procédé selon l'une quelconque des revendications précédentes, dans lequel, à l'étape (C), le film est orienté séquentiellement, et l'orientation séquentielle est effectuée soit d'abord dans le sens machine (MD) et ensuite dans le sens transversal (TD), soit d'abord dans le sens transversal (TD) et ensuite dans le sens machine (MD).

6. Procédé selon l'une quelconque des revendications précédentes, dans lequel un rapport d'étirage dans le sens machine (MD) est d'au moins 8,0 à 20,0 et/ou dans lequel un rapport d'étirage dans le sens transversal (TD) est d'au moins 8,0 à 20,0.

7. Procédé selon l'une quelconque des revendications précédentes, dans lequel l'agent de nucléation $\alpha$ polymérique (A2) est un polymère d'un composé vinylique de formule $CH_2=CH-CHR_1R_2$ dans laquelle $R_1$ et $R_2$ forment ensemble un cycle saturé, insaturé ou aromatique à 5 ou 6 chaînons, ou représentent indépendamment un groupe alkyle comprenant de 1 à 4 atomes de carbone.

8. Procédé selon la revendication 7, dans lequel l'agent de nucléation $\alpha$ polymérique (A2) est choisi dans le groupe constitué par le polyvinylcyclohexane, le poly(3-méthyl-1-butène) et leurs mélanges.

9. Procédé selon l'une quelconque des revendications précédentes, dans lequel l'agent de nucléation $\beta$ est choisi dans le groupe constitué par la 5,12-dihydro-quino[2,3-b]acridine-7,14-dione, la quino[2,3-b]acridine-6,7,13,14(5H,12H)-tétrone, la 5,6,12,13-tétrahydroquino[2,3-b]acridine-7,14-dione, et leurs mélanges.

10. Procédé selon l'une quelconque des revendications précédentes, dans lequel le film a une épaisseur comprise entre 0,5 et 10 μm.

11. Procédé selon l'une quelconque des revendications précédentes, dans lequel le film de polypropylène orienté biaxialement traité thermiquement ou le film de polypropylène orientaté biaxialement comprend en outre une couche métallique.

12. Film de polypropylène orienté biaxialement traité thermiquement, obtenu par le procédé selon l'une quelconque des revendications 1 à 11.

13. Condensateur comprenant un film isolant, le film isolant comprenant une couche du film de polypropylène orienté biaxialement traité thermiquement selon la revendication 12.

14. Utilisation du film orienté biaxialement traité thermiquement selon la revendication 12 pour augmenter la permittivité et/ou améliorer la résistance au claquage diélectrique d'un film isolant d'un condensateur.

15. Utilisation du film de polypropylène orienté biaxialement traité thermiquement selon la revendication 12 en tant qu'une couche d'un film isolant d'un condensateur.

CE IE1 IE2
293.15 K
373.15 K
383.15 K
ε'
f (Hz)
2.4
2.35
2.3
2.25
2.2
2.15
2.1
2.05
2
$10^{-1}$ $10^{0}$ $10^{1}$ $10^{2}$ $10^{3}$ $10^{4}$ $10^{5}$ $10^{6}$

**Figure 1**

Cavity Thikness (nm)
T (°C)
56
54
52
50
48
46
44
42
20 40 60 80 100 120 140 160

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020127862 A1
- EP 2543684 A
- EP 607703 A
- EP 1028984 A
- EP 1028985 A
- EP 1030878 A
- EP 177961 A
- EP 682066 A
- WO 9924479 A
- WO 0068315 A
- EP 1801157 A
- EP 1801155 A
- EP 1818365 A
- EP 1892264 A
- EP 0879830 A1
- EP 0574801 A
- EP 0574804 A
- EP 0190889 A2
- EP 0384431 A2
- EP 0142724 A2
- EP 0678527 A
- EP 0688817 A
- EP 0450342 A
- WO 2017064224 A


### Non-patent literature cited in the description


- *CHEMICAL ABSTRACTS,* 1047-16-1
- *CHEMICAL ABSTRACTS,* 1503-48-6
- *CHEMICAL ABSTRACTS,* 5862- 38-4
- *CHEMICAL ABSTRACTS,* 153250-52-3
- *CHEMICAL ABSTRACTS,* 19455-79-9
- *CHEMICAL ABSTRACTS,* 5862-38- 4
- **B.H. ZIMM ; W.H. STOCKMEYER.** *J. Chem. Phys.,* 1949, vol. 17, 1301
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, 15 B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **M. H. WAGNER.** Rheotens-Mastercurves and Drawability of Polymer Melts. *Polymer Engineering and Sience,* vol. 36, 925-935